# EUROPÄISCHE PATENTSCHRIFT

(11) **EP 2 921 378 B1**
(45) Veröffentlichungstag und Bekanntmachung des Hinweises auf die Patenterteilung: **25.07.2018**
(21) Anmeldenummer: 15150462.8
(22) Anmeldetag: 08.01.2015
(51) Int. Cl.: B62D 55/06, B62D 55/14, B62D 55/30, B62D 55/12

(54) **Raupenfahrzeug**
Piste preparation vehicle
Véhicule à chenille

(30) Priorität: 20.03.2014 DE 102014003964
(43) Veröffentlichungstag der Anmeldung: 23.09.2015
(73) Patentinhaber: CLAAS Industrietechnik GmbH, 33106 Paderborn (DE)
(72) Erfinder: Obermeier-Hartmann, Robert, 33142 Büren (DE); Rackow, Sascha, 33106 Paderborn (DE)
(74) Vertreter: Budach, Steffen

(56) Entgegenhaltungen:
- WO-A1-03/029070
- WO-A1-2006/128284
- CA-A1- 2 372 949
- CA-A1- 2 668 234
- CA-A1- 2 832 180
- JP-A- H05 286 460
- US-A- 2 442 354
- US-A- 2 467 947
- US-A- 4 519 654
- US-A- 4 923 257
- US-A- 5 452 949
- US-A- 5 566 773
- US-E- R E36 284

## Beschreibung

Die vorliegende Erfindung betrifft ein Raupenfahrzeug, insbesondere ein landwirtschaftliches Fahrzeug wie etwa einen Traktor, einen Mähdrescher oder dergleichen.

Ein solches Raupenfahrzeug hat typischerweise zwei oder vier Raupenlaufwerke, die die Karosserie tragen und in denen jeweils ein Raupenband zwischen Umlenkrollen gespannt ist. Die Umlenkrollen sind, anders als luftbereifte Räder, im Allgemeinen nicht in sich elastisch verformbar. Daher kommt bei einem Raupenfahrzeug einer schwingfähigen Verbindung zwischen Laufwerk und Karosserie eine besondere Bedeutung zu, wenn es darum geht, Erschütterungen der Karosserie und gegebenenfalls von an ihr montierten Werkzeugen des landwirtschaftlichen Fahrzeugs beim Überfahren von Bodenunebenheiten zu vermeiden oder zu begrenzen.

Aus der JP H05 286460 A ist ein Radfahrzeug bekannt, bei dem zur Verbesserung der Sicherheit und des Fahrkomforts auf unebenem Untergrund über jedes Rad eine Raupe gezogen werden kann. Die Raupen werden jeweils durch ein Paar an der Radachse abgestützte Arme mit endseitig angeordneten Rädern aufgespannt. Die Arme sind dabei in Schritten von 30° verstellbar und arretierbar ausgebildet.

Ein Raupenlaufwerk mit einem Raupenband für ein antriebsloses Raupenfahrzeug ist beispielsweise aus der US 4,923,257 A bekannt, wobei durch eine auf das Fahrzeug aufgebrachte Last die Spannung in dem Raupenband erhöht werden kann. Ein angetriebenes Raupenlaufwerk ist aus der US 5,566,773 A bekannt, wobei zwei Umlenkrollen eines Raupenbandes an einem Tragarm angeordnet sind, der zudem als Gehäuse für ein Übersetzungsgetriebe des Raupenlaufwerkes zum Antrieb einer der Umlenkrollen ausgestaltet ist. Eine Stützrollenlagerung für ein Raupenfahrzeug ist aus der US 4,519,654 A bekannt, wobei die Stützrollen unabhängig von Umlenkrollen eines Raupenbandes an einem Hauptrahmen des Raupenfahrzeuges angeordnet sind.

Ein landwirtschaftliches Fahrzeug mit Raupenlaufwerken ist zum Beispiel aus DE 199 19 959 A1 bekannt.

Bei diesem herkömmlichen Raupenfahrzeug sind zwei Umlenkrollen eines Raupenlaufwerks von zwei Tragarmen gehalten, die über aneinander anliegende und miteinander verschraubte Kupplungsflansche starr miteinander verbunden sind. Ein in Fahrzeugquerrichtung orientierter Lagerzapfen, um den die untereinander starr verbundenen Tragarme schwenkbar sind, ist mit einem zweiten, vertikal ausgerichteten Kupplungsflansch verbunden. Wenn eine der Umlenkrollen eine Bodenerhebung passiert, und die andere nicht zufällig gleichzeitig eine Senke durchläuft, wird der Achszapfen aufwärts bewegt. Um zu vermeiden, dass eine solche Aufwärtsbewegung auf die Karosserie übertragen wird, ist der Anschlussflansch nicht direkt mit der Karosserie verbunden, sondern über einen gegen den Achszapfen in Fahrzeuglängsrichtung versetzten Lagerzapfen an eine karosseriefeste Ankerplatte angelenkt. Indem der Flansch um die vom Lagerzapfen definierte Achse schwenkt, kann er der Aufwärtsbewegung der Umlenkrolle und des Achszapfens nachgeben, ohne diese auf die Karosserie zu übertragen. Die Länge des Lagerzapfens ist gering, sie entspricht der Dicke von Ankerplatte und Anschlussflansch. Deswegen wirkt das Gewicht des Fahrzeugs mit sehr kurzem Hebelarm auf die den Lagerzapfen aufnehmenden Bohrungen von Ankerplatte und Anschlussflansch, und es können lokal Kräfte auftreten, die erheblich höher sind als das Gewicht des Fahrzeugs. Ankerplatte und Anschlussflansch müssen daher, um den Lagerzapfen dauerhaft sicher zu halten, eine beträchtliche Wandstärke aufweisen, die zum Gewicht des Raupenlaufwerks beiträgt.
Aufgabe der Erfindung ist, ein Raupenfahrzeug mit einem einfach aufgebauten und auch bei verringertem Gewicht hoch belastbaren Raupenlaufwerk zu schaffen.

Die Aufgabe wird gelöst, indem bei einem Raupenfahrzeug mit einer Karosserie und wenigstens einem linken und einem rechten Raupenlaufwerk, wobei die Raupenlaufwerke mit der Karosserie über eine Maschinenachse verbunden sind und jeweils eine erste und eine zweite Umlenkrolle sowie einen ersten und einen zweiten Tragarm aufweisen, an denen die Umlenkrollen gelagert sind, eine Achse, um die die ersten und zweiten Tragarme jedes Laufwerks unabhängig voneinander schwenkbar gelagert sind, mit der Maschinenachse zusammenfällt. Da in einem solchen Aufbau die Umlenkrollen unabhängig voneinander relativ zur Maschinenachse in der Vertikalen beweglich sind, entfällt hier die Notwendigkeit, den Schwenkmittelpunkt der Tragarme in der aus DE 199 19 959 A1 bekannten Weise relativ zur Karosserie beweglich zu lagern, so dass der Aufbau des Raupenlaufwerks vereinfacht und sein Gewicht verringert werden kann.

Die Maschinenachse umfasst vorzugsweise einen zylindrischen Achskörper, der Lagerbuchsen des vorderen und des hinteren Tragarms durchsetzt. Ein solcher Achskörper kann unmittelbar an der Karosserie starr befestigt, zum Beispiel angeflanscht, sein, oder er kann in eine Aufnahme der Karosserie eingreifen.

Um ein voneinander unabhängiges Schwenken der beiden Tragarme zu ermöglichen, umgreifen deren Lagerbuchsen den Achskörper vorzugsweise axial gegeneinander versetzt.

Um einem möglichen Verkanten der Lagerbuchsen am Achskörper entgegenzuwirken, sollte jede Lagerbuchse im Wesentlichen symmetrisch bezüglich einer in Fahrtrichtung durch die Mittelpunkte der beiden Umlenkrollen verlaufenden Ebene sein. Hierfür kann wenigstens eine der Lagerbuchsen in axialer Richtung in zwei Teile geteilt sein, so dass die andere Lagerbuchse den Achskörper zwischen den zwei Teilen der einen Lagerbuchse umgreifen kann.

Um das Gewicht des Raupenfahrzeugs gleichmäßig auf die Aufstandsfläche eines die Umlenkrollen umschlingenden Laufbandes zu verteilen, kann zwischen den zwei Umlenkrollen eines der Raupenlaufwerke jeweils wenigstens eine Stützrolle angeordnet sein, wobei ein Lager der Stützrolle von einem Lenker gehalten ist, der an einen der Tragarme angelenkt ist.

Ein hydraulisches Element kann an den einen Tragarm und das Lager der Stützrolle angelenkt sein, um diese gegen den Boden zu drücken.

Um eine gleichmäßige Verteilung des Fahrzeuggewichts über eine lange Aufstandsfläche hinweg zu erzielen, kann das Lager der Stützrolle von einem Gestell gebildet sein, in dem wenigstens eine weitere Stützrolle gelagert ist.

Der erste Tragarm kann zwei gelenkig verbundene Abschnitte und ein hydraulisches Element umfassen, das an beide Abschnitte angelenkt ist, um den Achsabstand der ersten Umlenkrolle von der Maschinenachse zu variieren und auf diese Weise ein die Umlenkrollen umschlingendes Raupenband straff zu halten.

Ein weiteres hydraulisches Element kann jeweils beabstandet von der Maschinenachse an beiden Tragarmen angreifen, um gleichzeitige, gegensinnige Schwenkbewegungen der Tragarme zu dämpfen, die insbesondere bei einem Auf- und Abschwingen der Karosserie relativ zum Raupenlaufwerk auftreten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht von zwei Raupenfahrzeugen;
- Fig. 2: eine Seitenansicht eines Raupenlaufwerks, das an den in Fig. 1 gezeigten Fahrzeugen verwendbar ist; und
- Fig. 3: eine Draufsicht auf das Raupenlaufwerk der Fig. 2.

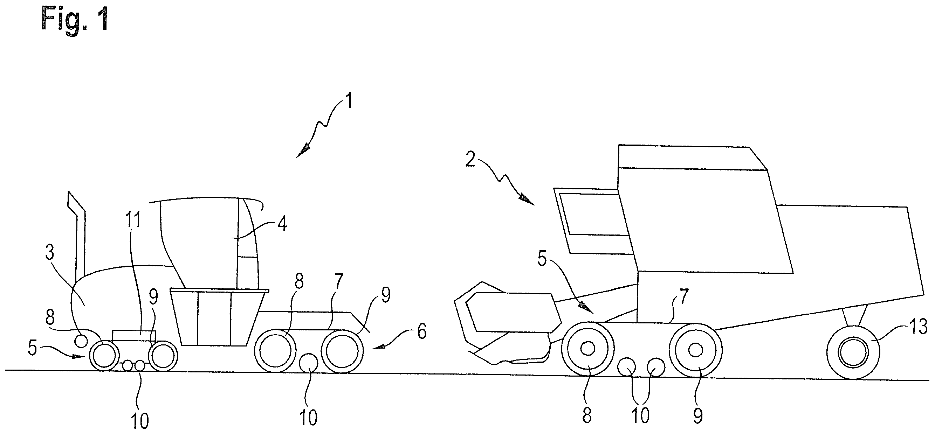

Fig. 1 zeigt eine stark schematisierte Seitenansicht zwei Beispiele von Raupenfahrzeugen gemäß der Erfindung, eine landwirtschaftlichen Zugmaschine 1 und einen Mähdrescher 2. Bei der Zugmaschine 1 ist eine Karosserie mit Motorgehäuse 3 und Fahrerkabine 4 vorne und hinten von Paaren von Raupenlaufwerken 5, 6 getragen. Jedes Raupenlaufwerk 5 bzw. 6 umfasst in an sich bekannter Weise zwei von einem Raupenband 7 umschlungene Umlenkrollen 8, 9. Zwischen den Umlenkrollen 8, 9 können Stützrollen 10 angeordnet sein, um das Gewicht des Fahrzeugs möglichst gleichmäßig auf den zwischen den Umlenkrollen 8, 9 am Boden anliegenden Teil des Raupenbandes 7 zu verteilen.

Die beiden vorderen Raupenlaufwerke 5 sind an einem Drehschemel 11 befestigt, der seinerseits um eine vertikale Achse im Bezug zur Karosserie drehbar ist.

Die hinteren Raupenlaufwerke 6 sind hier starr mit der Karosserie verbunden; es könnte aber auch hier ein Drehschemel vorgesehen werden, um die Wendigkeit des Fahrzeugs zu verbessern und um ein Fahren im Hundegang zu ermöglichen.

Alternativen Ausgestaltungen zu Folge kann an einer lenkbaren Achse der Drehschemel 11 auch durch eine Achsschenkellenkung ersetzt sein, die eine Drehung der beiden zusammen eine lenkbare Achse bildenden Raupenlaufwerke 5 oder 6 um jeweils verschiedene Achsen an der linken bzw. rechten Seite der Karosserie ermöglicht.

Einer weiteren Abwandlung zu Folge kann an einer der beiden Achsen der Zugmaschine 1, vorzugsweise der geringer belasteten, wie für den Mähdrescher 2 gezeigt das Paar von Raupenlaufwerken durch übliche, mit Luftreifen bestückte Räder 13 ersetzt sein. Wenn solche Räder 13 vorhanden sind, bilden sie zweckmäßigerweise eine lenkbare Achse des Fahrzeuges; eine lenkbare Verbindung der Raupenlaufwerke mit der Karosserie, etwa über den oben erwähnten Drehschemel 11, ist dann nicht erforderlich.

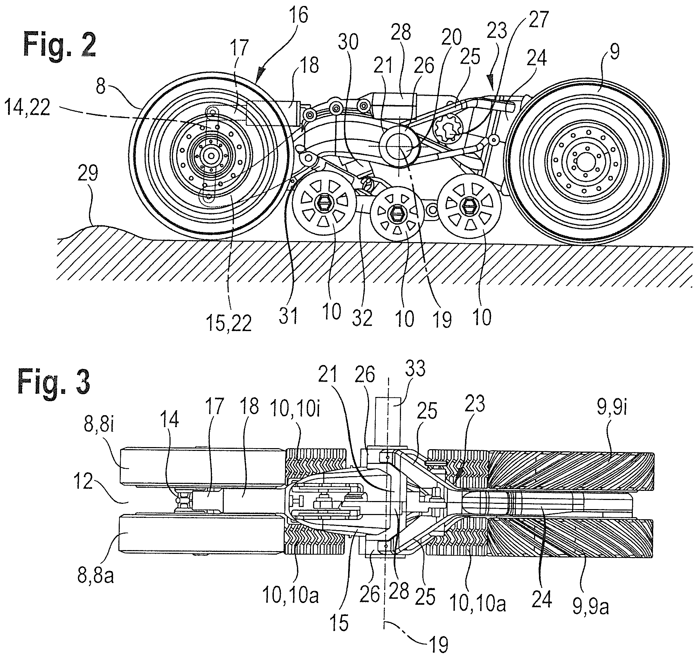

Ein an einem erfindungsgemäßen Fahrzeug verwendbares Raupenlaufwerk ist in Fig. 2 in Seitenansicht und in Fig. 3 in Draufsicht dargestellt. Im Folgenden wird angenommen, dass es sich bei dem gezeigten Raupenlaufwerk um das bei beiden Fahrzeugen 1 und 2 vorhandene vordere Raupenlaufwerk 5 handelt, doch versteht sich, dass das hintere Raupenlaufwerk 6 der Zugmaschine 1 entsprechend aufgebaut sein kann.

Das Raupenband 7, das die Umlenkrollen 8, 9 umschlingt und von den Stützrollen 10 gegen den Boden angedrückt wird, ist in Fig. 2 und 3 weggelassen. So kann man in der Draufsicht der Fig. 3 erkennen, dass die Umlenkrollen 8, 9 und Stützrollen 10 jeweils einen inneren Rollenkörper 8i, 9i bzw. 10i an einer der Karosserie zugewandten Innenseite des Raupenlaufwerks 5 und einen äußeren Rollenkörper 8a, 9a bzw. 10a an einer Außenseite umfassen, die voneinander durch einen Zwischenraum 12 getrennt sind.

Eine Achse der vorderen Umlenkrolle 8 ist gehalten durch einen Lenker 14, der in dem Zwischenraum 12 zwischen der Spitze einer vorderen Schwinge 15 und der Kolbenstange 17 eines hydraulischen Elements 16 aufgehängt ist, dessen Zylinder 18 seinerseits wieder an die vordere Schwinge 15 angelenkt ist. So ist durch Ein- oder Ausfahren der Kolbenstange 17 der Achsabstand der Umlenkrolle 8 von einer Maschinenachse 19 verstellbar, die hier durch die Achse eines zylindrischen Achskörpers 20 gebildet ist. Der Achskörper 20 erstreckt sich senkrecht zur Zeichnungsebene der Fig. 2 und ist von einer am rückwärtigen Ende der Schwinge 15 gebildeten Lagerbuchse 21 umgriffen. Der Lenker 14 und die vordere Schwinge 15 bilden so einen längenverstellbaren vorderen Tragarm 22, der die Umlenkrolle 8 mit dem Achskörper 20 um dessen Achse 19 schwenkbar verbindet.

Ein hinterer Tragarm 23 ist in der Draufsicht der Fig. 3 in etwa Y-förmig, mit einem in den Zwischenraum 12 zwischen den Rollenkörpern 9i, 9a der hinteren Umlenkrolle 9 eingreifenden Schenkel 24 und zwei nach vorn divergierenden Schenkeln 25, die an ihren vorderen Enden jeweils einen Teil einer den Achskörper 20 beiderseits der Lagerbuchse 21 umgreifenden Lagerbuchse 26 bilden.

In dem Schenkel 24 des hinteren Tragarms 23 ist ein Getriebe untergebracht, das Drehmoment zum Antreiben des Raupenbandes 7 von einem Motor des Fahrzeugs über eine nicht dargestellte, an einem Kupplungsflansch 27 angreifende Welle empfängt und auf die Umlenkrolle 9 überträgt. Um Schwingbewegungen der Umlenkrolle 9 und des Tragarms 23 um die vom Achskörper 20 definierte Maschinenachse 19 folgen zu können, ist die Welle längenveränderlich und kardanisch aufgehängt.

Ein zweites hydraulisches Element 28 erstreckt sich oberhalb des Achskörpers 20 und greift an der vorderen Schwinge 15 und dem hinteren Tragarm 23 an.

Das hydraulische Element 28 ist gedämpft elastisch stauch- und dehnbar und ermöglicht es so bei Vorwärtsfahrt (nach links in Fig. 2 und 3) nacheinander der Umlenkrolle 8 und der Umlenkrolle 9, beim Überfahren einer Bodenerhebung 29 unter Stauchung des Elements 28 nach oben auszuweichen, ohne dabei sofort den Achskörper 20 mitzunehmen. So werden Bodenunebenheiten abgefedert.

Ein drittes hydraulisches Element 30 ist einerseits mit der vorderen Schwinge 15 und andererseits mit einem hinteren unteren Ende eines Lenkers 31, dessen vorderes oberes Ende mit der Schwinge 15 verbunden ist, oder mit einem an den Lenker 31 angelenkten Gestell 32 verbunden, an dem die Stützrollen 10 gelagert sind. Auch das hydraulische Element 30 ist gedämpft elastisch stauch- und dehnbar, um eine Ausweichbewegung der Stützrollen 10 zu ermöglichen, wenn diese über die Bodenerhebung 29 hinwegrollen. Die schwenkbare Verbindung des Gestells 32 mit dem Lenker 31 gewährleistet, dass jederzeit wenigstens zwei der Stützrollen 10 Gewicht des Fahrzeugs auf den Boden übertragen.

In der Darstellung der Fig. 3 steht der Achskörper 20 an der der Karosserie zugewandten Seite des Raupenlaufwerks 5 über. Der überstehende Abschnitt 33 des Achskörpers 20 kann in einer entsprechenden Aussparung der Karosserie (oder, falls vorhanden, eines Drehschemels 11) eingeführt und in dieser verankert sein. Da der Abschnitt 33 sich in geradliniger Verlängerung des Achskörpers 20 entlang der Maschinenachse 19 erstreckt - insbesondere kann er diesen einteilig verlängern - , treten, wenn der Achskörper 20 nach Einführen des Abschnitts 33 in die Aussparung der Karosserie oder des Drehschemels mit dem Gewicht des Fahrzeugs belastet wird, keine in Richtung der Maschinenachse 19 orientierten Drehmomente auf, die eine Drehung des Achskörpers 20 bewirken könnten.

Das Auftreten eines in Fahrzeuglängsrichtung orientierten Drehmoments im Achskörper 20 ist unvermeidlich, wenn dieser dem Gewicht des Fahrzeugs ausgesetzt ist. Damit der Achskörper 20 diesem Drehmoment nicht nachgibt, müssen die Wände der Aussparung den Abschnitt 33 mit einem entgegengesetzt gleichen Drehmoment festhalten. Da der Abschnitt 33 jedoch eine beträchtliche Länge aufweisen darf, können die Kräfte, die zwischen dem Abschnitt 33 und den Wänden der Aussparung wirken, niedrig gehalten werden, was es erlaubt, die Wandstärken der miteinander verbundenen Teile von Raupenlaufwerk und Karosserie niedrig zu halten und das Gewicht des Fahrzeugs zu reduzieren.

### Bezugszeichen

- 1: Zugmaschine
- 2: Mähdrescher
- 3: Motorgehäuse
- 4: Fahrerkabine
- 5: Raupenlaufwerk
- 6: Raupenlaufwerk
- 7: Raupenband
- 8: Umlenkrolle
- 8a, 8i: Rollenkörper
- 9: Umlenkrolle
- 9a, 9i: Rollenkörper
- 10: Stützrolle
- 10a, 10i: Rollenkörper
- 11: Drehschemel
- 12: Zwischenraum
- 13: Rad
- 14: Lenker
- 15: Schwinge
- 16: hydraulisches Element
- 17: Kolbenstange
- 18: Zylinder
- 19: Maschinenachse
- 20: Achskörper
- 21: Lagerbuchse
- 22: vorderer Tragarm
- 23: hinterer Tragarm
- 24: Schenkel
- 25: Schenkel
- 26: Lagerbuchse
- 27: Kupplungsflansch
- 28: hydraulisches Element
- 29: Bodenerhebung
- 30: hydraulisches Element
- 31: Lenker
- 32: Gestell
- 33: Abschnitt

## Patentansprüche

1. Raupenfahrzeug mit einer Karosserie und wenigstens einem linken und einem rechten Raupenlaufwerk (5, 6), wobei die Raupenlaufwerke (5, 6) mit der Karosserie über eine Maschinenachse (19) verbunden sind und jeweils eine erste und eine zweite Umlenkrolle (8, 9) sowie einen ersten und einen zweiten Tragarm (22, 23) aufweisen, an denen die Umlenkrollen (8, 9) gelagert sind, **dadurch gekennzeichnet, dass** eine Achse, um die die ersten und zweiten Tragarme (22, 23) jedes Laufwerks (5, 6) unabhängig voneinander schwenkbar gelagert sind, mit der Maschinenachse (19) zusammenfällt, wobei zwischen den zwei Umlenkrollen (8, 9) eines der Raupenlaufwerke (5, 6) wenigstens eine Stützrolle (10) angeordnet ist und dass ein Lager der Stützrolle von einem Lenker (31) gehalten ist, der an einen der Tragarme (22) angelenkt ist.

2. Raupenfahrzeug nach Anspruch 1, **dadurch gekennzeichnet, dass** die Maschinenachse (19) einen zylindrischen Achskörper (20) umfasst, der Lagerbuchsen (21, 26) des ersten und des zweiten Tragarms (22, 23) durchsetzt.

3. Raupenfahrzeug nach Anspruch 2, **dadurch gekennzeichnet, dass** die Lagerbuchsen (21, 26) der ersten und der zweiten Tragarme (22, 23) axial gegeneinander versetzt den Achskörper (20) umgreifen.

4. Raupenfahrzeug nach Anspruch 2 oder 3, **dadurch gekennzeichnet, dass** wenigstens eine der Lagerbuchsen (26) in axialer Richtung in zwei Teile geteilt ist und die andere Lagerbuchse (21) den Achskörper (20) zwischen den zwei Teilen der einen Lagerbuchse (26) umgreift.

5. Raupenfahrzeug nach Anspruch 1, **gekennzeichnet durch** ein hydraulisches Element (30), das an den einen Tragarm (22) und das Lager der Stützrolle (10) angelenkt ist.

6. Raupenfahrzeug nach Anspruch 1 oder 5,**dadurch gekennzeichnet, dass** das Lager der Stützrolle (10) von einem Gestell (32) gebildet ist, in dem wenigstens eine weitere Stützrolle (10) gelagert ist.

7. Raupenfahrzeug nach einem der vorhergehenden Ansprüche, **dadurch gekennzeichnet, dass** der erste Tragarm (22) zwei gelenkig verbundene Abschnitte (14, 15) und ein hydraulisches Element (16) umfasst, das an beide Abschnitte (14, 15) angelenkt ist, um den Achsabstand der ersten Umlenkrolle (8) von der Maschinenachse (19) zu variieren.

8. Raupenfahrzeug nach einem der vorhergehenden Ansprüche, **gekennzeichnet durch** ein hydraulisches Element (28), das jeweils beabstandet von der Maschinenachse (19) an beiden Tragarmen (22, 23) angreift.

## Claims

1. Crawler vehicle with a body and at least one left and one right crawler track (5, 6), wherein the crawler tracks (5, 6) are connected to the body via a machine axis (19) and each have a first and a second deflection roller (8, 9), as well as a first and a second support arm (22, 23) on which the deflection rollers (8, 9) are mounted, **characterized in that** an axle, about which the first and second support arms (22, 23) of each track (5, 6) are pivotably mounted independently of each other, coincides with the machine axis (19), wherein at least one support roller (10) is arranged between the two deflection rollers (8, 9) of one of the crawler tracks (5, 6) and **in that** a bearing of the support roller is held by a connecting rod (31) which is hinged to one of the support arms (22).

2. Crawler vehicle according to claim 1, **characterized in that** the machine axis (19) comprises a cylindrical axle shaft (20) which passes through bearing bushes (21, 26) of the first and of the second support arm (22, 23).

3. Crawler vehicle according to claim 2, **characterized in that** the bearing bushes (21, 26) of the first and of the second support arms (22, 23) engage around the axle shaft (20) axially offset with respect to each other.

4. Crawler vehicle according to claim 2 or 3, **characterized in that** at least one of the bearing bushes (26) is divided into two parts in axial direction and the other bearing bush (21) engages around the axle shaft (20) between the two parts of the bearing bush (26).

5. Crawler vehicle according to claim 1, **characterized by** a hydraulic component (30) which is hinged to the one support arm (22) and the bearing of the support roller (10).

6. Crawler vehicle according to claim 1 or 5, **characterized in that** the bearing of the support roller (10) is formed by a frame (32) in which at least one further support roller (10) is mounted.

7. Crawler vehicle according to one of the previous claims, **characterized in that** the first support arm (22) comprises two sections (14, 15) connected in an articulated manner and a hydraulic component (16) which is hinged to both sections (14, 15) in order to vary the axial distance of the first deflection roller (8) from the machine axis (19).

8. Crawler vehicle according to one of the previous claims, **characterized by** a hydraulic component (28) which engages both support arms (22, 23) in each case at a distance from the machine axis (19).

## Revendications

1. Véhicule chenillé comprenant une carrosserie et au moins des trains de roulement à chenilles gauche et droit (5, 6), les trains de roulement à chenilles (5, 6) étant reliés à la carrosserie par l'intermédiaire d'un axe de machine (19) et comportant chacun un premier et un second galet de renvoi (8, 9) ainsi qu'un premier et un second bras porteur (22, 23) sur lesquels les galets de renvoi (8, 9) sont montés, **caractérisé en ce qu'**un axe, selon lequel les premier et second bras porteurs (22, 23) de chaque train de roulement (5, 6) sont montés à pivotement indépendamment l'un de l'autre, coïncide avec l'axe de machine (19), entre les deux galets de renvoi (8, 9) d'un des trains de roulement à chenilles (5, 6) étant disposé au moins un galet de support (10), et **en ce qu'**un palier du galet de support est maintenu par un bras (31) qui est articulé sur un des bras porteurs (22).

2. Véhicule chenillé selon la revendication 1, **caractérisé en ce que** l'axe de machine (19) comprend un corps d'essieu cylindrique (20) qui traverse des coussinets (21, 26) du premier et du second bras porteur (22, 23).

3. Véhicule chenillé selon la revendication 2, **caractérisé en ce que** les coussinets (21, 26) des premiers et des seconds bras porteurs (22, 23) entourent le corps d'essieu (20) de manière décalée axialement l'un par rapport à l'autre.

4. Véhicule chenillé selon la revendication 2 ou 3, **caractérisé en ce qu'**au moins un des coussinets (26) est divisé en deux dans la direction axiale et l'autre coussinet (21) entoure le corps d'essieu (20) entre les deux parties de l'un des coussinets (26).

5. Véhicule chenillé selon la revendication 1, **caractérisé par** un élément hydraulique (30) qui est articulé sur l'un des bras porteur (22) et sur le palier du galet de support (10).

6. Véhicule chenillé selon la revendication 1 ou 5, **caractérisé en ce que** le palier du galet de support (10) est formé par un châssis (32) dans lequel est monté au moins un autre galet de support (10).

7. Véhicule chenillé selon une des revendications précédentes, **caractérisé en ce que** le premier bras porteur (22) comprend deux portions (14, 15) reliées de manière articulée et un élément hydraulique (16) qui est articulé sur les deux portions (14, 15) afin de faire varier la distance d'axe à axe du premier galet de renvoi (8) à l'axe de machine (19).

8. Véhicule chenillé selon une des revendications précédentes, **caractérisé par** un élément hydraulique (28) qui agit, à distance de l'axe de machine (19), sur chacun des deux bras porteurs (22, 23).
